# EUROPÄISCHE PATENTSCHRIFT

(11) **EP 2 247 362 B1**
(45) Veröffentlichungstag und Bekanntmachung des Hinweises auf die Patenterteilung: **23.04.2014**
(21) Anmeldenummer: 09716184.8
(22) Anmeldetag: 26.02.2009
(51) Int. Cl.: B01D 46/24, B01D 50/00, B01D 46/52, B01D 46/00

(54) **LUFTFILTER MIT VORABSCHEIDER**
AIR FILTER COMPRISING A PREFRACTIONATOR
FILTRE À AIR DOTÉ D'UN PRÉ-DÉPOUSSIÉREUR

(30) Priorität: 26.02.2008 DE 102008011186; 23.12.2008 DE 102008062955
(43) Veröffentlichungstag der Anmeldung: 10.11.2010
(60) Teilanmeldung: 12180399.3
(73) Patentinhaber: Mann + Hummel GmbH, 71638 Ludwigsburg (DE)
(72) Erfinder: MÜNKEL, Karlheinz, 75038 Oberderdingen (DE); KOLCZYK, Markus, 74395 Mundelsheim (DE); BECKER, Stefan, 68305 Mannheim (DE); HEIM, Michael, 71691 Freiberg a. N. (DE)
(86) Internationale Anmeldenummer: PCT/EP2009/052319
(87) Internationale Veröffentlichungsnummer: WO 2009/106591

(56) Entgegenhaltungen:
- EP-A- 0 558 091
- EP-A1- 1 287 896
- DE-A1- 2 818 791
- DE-A1-102005 031 058
- DE-U1- 29 819 335
- FR-A- 1 320 200
- US-A- 3 360 909
- US-A- 4 537 608
- US-A- 5 320 653
- US-A1- 2003 182 910
- US-A1- 2007 289 265
- US-B1- 6 572 667

## Beschreibung

### Gebiet der Erfindung

Die vorliegende Erfindung betrifft einen Luftfilter mit Vorabscheider, und insbesondere einen Luftfilter mit Vorabscheider mit einer aufeinander abgestimmten Strömungsgeometrie zwischen einer Abströmgeometrie eines Vorabscheiders und einer Anströmfläche eines Filterelementes eines Hauptfilters.

Insbesondere im Bereich von Brennkraftmaschinen, die auf bzw. in Fahrzeugen zum Einsatz kommen, ist die Ausgestaltung eines effizienz- und platzoptimierten Luftfiltersystems unerlässlich, um die Abmessungen gering zu halten, und auf der anderen Seite eine dennoch hohe Effizienz der Luftfilteranordnung zu ermöglichen.

Aus der US 4537608 A ist ein Gasreinigungssystem mit einer Wirbelabscheideranordnung bekannt, bei welchem eine Mehrzahl von Wirbelabscheidern in Reihen angeordnet sind.

Aus der US 2003/0182910 A1 ist ein Vorabscheider bekannt mit einer Staubaustragskammer bekannt.

Aus der DE 28 18 791 A1 ist ein Wirbelrohr für Zyklonabscheider bekannt, mit einer seitlichen Austragsöffnung, sowie ein Luftreiniger, der mit Wirbelrohren ausgerüstet ist.

Aus der US 3360909 A ist ein Filterapparat mit mindestens einer Filterzelle und einem um diese angeordnete Staubbox bekannt.

Aus der FR 1320200 A ist ein zweistufiger Filter mit einem Zyklonabscheider als erste Stufe bekannt.

Aus beispielsweise EP 1 364 695 A1 ist ein Luftfilter bekannt, der in den Ansaugtrakt einer Brennkraftmaschine integriert ist, um die den Zylindern der Brennkraftmaschine zuzuführende Verbrennungsluft einer Filtration zu unterziehen. Der Luftfilter ist im Wesentlichen dreiteilig aufgebaut und umfasst in einem Filtergehäuse ein Filterelement, welches als auswechselbare Filterpatrone ausgebildet ist, die axial von der Verbrennungsluft durchströmt wird und radial über einen verschließbaren Deckel in das Filtergehäuse einsetzbar ist. Der Filterpatrone ist ein Zyklon-Vorabscheider vorgeschaltet, der zur Abscheidung von groben Schmutzpartikeln dient. Stromab der Filterpatrone befindet sich ein Sekundär- bzw. Feinfilterelement, das ebenfalls radial bei geöffnetem Deckel in das Filtergehäuse einsetzbar ist. Der Zyklon-Vorabscheider, die Filterpatrone und das Feinfilterelement liegen axial hintereinander und werden ohne Umlenkung der zu reinigenden Verbrennungsluft in Achsrichtung durchströmt.

### Zusammenfassung der Erfindung

Der vorliegenden Erfindung liegt die Aufgabe zugrunde, ein Luftfilter mit einem Vorabscheider bereitzustellen, der eine optimierte Anströmgeometrie bereitstellt, um auf diese Weise die Effizienz des Luftfiltersystems zu optimieren.

Die Aufgabe der vorliegenden Erfindung wird gelöst durch den Gegenstand der unabhängigen Ansprüche, wobei weitergebildete Ausführungsformen in den unabhängigen Ansprüchen verkörpert sind.

Gemäß einer beispielhaften Ausführungsform der Erfindung wird ein Luftfilter für eine Brennkraftmaschine bereitgestellt mit einem Luftfiltergehäuse, einem Vorabscheider, wobei das Luftfiltergehäuse eine Aufnahme für ein Filterelement und einen Rohgasraumbereich aufweist, wobei der Rohgasraumbereich zu dem Luftfilter begrenzt wird durch das Luftfiltergehäuse und zu einem einzusetzenden Filterelement begrenzt wird durch eine rohgasseitige Mantelfläche bzw. -anströmfläche, wobei der Vorabscheider eine Luftauslasskonfiguration aufweist, wobei die Luftauslasskonfiguration mit einer Anstromfläche eines einzusetzenden Filterelementes korrespondiert, wobei der Vorabscheider eine Zyklonenanordnung mit einer Mehrzahl von Einzelzyklonen mit jeweils einem Abströmwege aufweist, wobei die Abströmwege auf eine Anströmfläche eines einzusetzenden Filterelementes ausgerichtet verteilt ist, wobei die Aufnahme des Luftfiltergehäuses ausgelegt ist, um ein Filterelement in der Form eine Mehrfachbalgfilters mit einem außenliegenden Filterbalg und einem radial dazu innenliegenden Filterbalg aufzunehmen, wobei wenigstens ein Teil der Einzelzyklone mit ihren Abströmwegen auf eine Linie korrespondierend mit einem Anströmungskanal des einzusetzenden Filterelementes ausgerichtet sind.

Durch die unterschiedlichen Wirkungsweisen eines Zyklonenvorabscheiders und eines Filterelementes als Hauptfilter ergeben sich in einem Luftfiltergehäuse unterschiedliche Wirkungs- und Arbeitsweisen der unterschiedlichen Filterstufen in einem Luftfiltergehäuse. Diese können durch den angegebenen Luftfilter dahingehend optimiert werden, dass die Abströmwege, die im Regelfall mit einer Auslassöffnung eines Einzelzyklons korrespondieren auf entsprechende Anströmflächen ausgerichtet werden, die sich bei einem Mehrfachbalgfilter in der Regel aus einem Anströmkanal ergeben, der durch beispielsweise zwei nebeneinander angeordneten Filterbälgen gebildet wird. Dabei werden die Einzelzyklone der Zyklonenanordnung derart ausgerichtet, dass deren Abströmwege bzw. deren Mündungen auf entsprechende Anströmkanäle des Filterelementes ausgerichtet sind, sodass die von den Einzelzyklonen abströmende Luft weniger oder nicht gegen eine Stirnfläche strömt, die zu einer Erhöhung des Luftwiderstandes führen würde. Auf diese Weise kann der gesamte Strömungswiderstand der Luftfilteranordnung optimiert werden, indem die Abströmwege eines Vorabscheiders korrespondierend angeordnet werden mit den Anströmwegen eines Mehrfachbalgfilters. Da ein Mehrfachbalgfilter konstruktionsbedingt im Regelfall einen ringförmigen Anströmkanal aufweist, ist es von Bedeutung, für die Optimierung des Strömungswiderstandes innerhalb der Luftfilteranordnung die Abströmwege der Einzelzyklone so auszurichten, dass diese korrespondierend mit einer ringförmigen Anströmkanalgeometrie ausgerichtet sind. Dabei können die Einzelzyklone auch auf mehrere Anströmkanäle ausgerichtet sein, die beispielsweise konzentrisch zueinander liegen. Die Anströmkanäle sind dabei nicht zwingend ringförmig, sondern können ebenfalls linien- oder flächenförmig im Querschnitt ausgestaltet sein. An dieser Stelle kann es von Bedeutung sein, dass keine oder nur eine eingeschränkte Strömungsumkehr oder Strömungsablenkung der von den Einzelzyklonen des Vorabscheiders abgegebenen Luft- bzw. Fluidströmung erfolgen muss.

Gemäß einer beispielhaften Ausführungsform der Erfindung sind die Mehrzahl von Einzelzyklonen mit ihren Abströmwegen auf einen Ringspalt zwischen wenigstens zwei Filterbälgen eines einzusetzenden Mehrfachbalgfilters verteilt ausgerichtet.

Auf diese Weise kann der gesamte Strömungswiderstand der Luftfilteranordnung weiter optimiert werden, indem die Abströmwege eines Vorabscheiders korrespondierend angeordnet werden mit den Anströmwegen eines Mehrfachbalgfilters. Da ein Mehrfachbalgfilter konstruktionsbedingt im Regelfall einen ringförmigen Anströmkanal aufweist, ist es von Bedeutung, für die Optimierung des Strömungswiderstandes innerhalb der Luftfilteranordnung die Abströmwege der Einzelzyklone so auszurichten, dass diese korrespondierend mit einer ringförmigen Anströmkanalgeometrie ausgerichtet sind. Die Einzelzylkone können dabei gleichmäßig über die Erstreckungslinie eines Ringspaltes verteilt sein. Dabei können die Einzelzyklone auch auf mehrere Anströmkanäle ausgerichtet sein, die beispielsweise konzentrisch zueinander liegen.

Gemäß einer beispielhaften Ausführungsform der Erfindung weist der Luftfilter ein Filterelement in Form eines Mehrfachbalgfilters auf mit einem außenliegenden Filterbalg und einem radial dazu innenliegenden Filterbalg, wobei die Faltentiefe des außenliegenden Filterbalges kleiner ist als die Faltentiefe eines dazu benachbart radial innenliegenden Filterbalges.

Auf diese Weise kann der Anströmkanal insbesondere bei einer Anströmung in einen Ringspalt zwischen zwei Filterbälgen verhältnismäßig weit radial nach außen angeordnet werden, sodass der Anströmkanal dadurch eine größere effektive Querschnittsfläche aufweisen kann, als ein Anströmkanal, der radial weiter innen liegt. Dies ergibt sich aus dem größeren Umfang des Ringspaltes, wenn dieser radial weiter außen angeordnet werden kann. Ferner kann durch das Bereitstellen einer größeren Faltentiefe bei einem radial innen liegenden Faltenbalg die Flächenbelastung des inneren Faltenbalges und des äußeren Faltenbalges aneinander angenähert werden, sodass eine gleichmäßigere Filterflächenbelastung auftritt.

Gemäß einer beispielhaften Ausführungsform der Erfindung wird an dem außen liegenden Filterbalg an einem der Anströmseite zugewandten Seite eine formwahrende Schale vorgesehen, wobei sich die Schale nur teilweise in einer radialen Richtung über die Faltentiefe des außenliegenden Filterbalges erstreckt.

Auf diese Weise wird durch die formwahrende Schale eine Formstabilität eines Filterelementes bereitgestellt, die insbesondere bei Faltenbalgfiltern von Bedeutung ist, ohne eine Stirnfläche eines Faltenbalges unnötig zu verschließen. Vielmehr können die offenen Flächen zwischen den Filterfalten als zusätzliche Anströmflächen in axialer Richtung verwendet werden, sodass sich eine größere effektive Querschnittsfläche eines Anströmkanales zwischen einem äußeren Faltenbalg und einem inneren Faltenbalg ergibt. Die Rohgasseite und die Reingasseite des entsprechenden Faltenbalges kann durch eine Verklebung verschossen sein, die sich jedoch zur zuverlässigen Trennung nur auf einer Seite des Faltenbalges befinden muss, Ferner können auf der formwahrenden Schale Luft- bzw. Fluidleitende Anordnungen vorgesehen sein, wie beispielsweise Luftleitbleche, um eine optimierte und aerodynamisch günstigere Anströmung des Anströmkanales bereitstellen zu können. Die kann beispielsweise eine trichterförmige Ausgestaltung der stirnseitigen Anströmfläche der formwahrenden Schale sein, die strömungstechnische Staupunkte vermeidet.

Gemäß einer beispielhaften Ausführungsform der Erfindung weist ein Einzelzyklon einen Zyklonenkanal auf, an dessen Einlassende eine Leitblechanordnung vorgesehen ist, die ausgelegt ist, um eine einströmende Luft bzw. ein Fluid in eine Drehbewegung um eine Erstreckungsachse des Zyklonenkanals zu versetzen, und wobei an dessen Auslassende eine konzentrische Auslassanordnung vorgesehen ist mit einem innenliegenden Reinluftauslass und einem außen liegenden Filterpartikelauslass.

Auf diese Weise wird ermöglicht, mit einer verhältnismäßig kompakten Bauform einen Einzelzyklon bereitzustellen, bei dem zu reinigende Luft bzw. zu reinigendes Fluid derart in eine Rotationsbewegung innerhalb des Zyklonenkanals versetzt wird, dass sich herauszufilternde Partikel aufgrund des Fliehkraft an die Außenwand des Zyklonenkanals bewegen und bei einer fortschreitenden Strömung entlang der axialen Ausdehnungsrichtung des Zyklonenkanals zwischen einen Ringschlitz gedrückt werden, der außerhalb des innenliegenden Reinluftauslasses liegt und einen außen liegenden Filterpartikelauslass darstellt. Die von den schweren Filterpartikeln gereinigte Luft bzw. Fluid gelangt dann durch den innenliegenden Reinluftauslass in den Abströmbereich des Einzelzyklons, der auf eine Anströmfläche eines Filterelementes ausgerichtet ist.

Gemäß einer beispielhaften Ausführungsform der Erfindung befindet sich in Umfangsrichtung zwischen einer Außenwand des Luftfiltergehäuses und einer Anströmfläche eines einzusetzenden Filterelementes eine Fluidleitblechanordnung. Mit einer derartigen Leitblechanordnung kann eine optimierte Strömungsgeometrie innerhalb des Luftfiltergehäuses bereitgestellt werden, sodass insbesondere feinere Nuancen im Strömungsweg eingestellt werden können, ohne dass die gesamte Geometrie eines Luftfiltergehäuses modifiziert werden muss.

Es sei verstanden, dass auch eine Kombination der zuvor beschriebenen Merkmale möglich ist, wodurch sich zum Teil eine synergetische Wechselwirkung einstellen kann, die über die Summe der Einzelwirkungen der genannten Merkmale hinausgeht.

Im Folgenden werden nun beispielhafte Ausführungsformen der Erfindung anhand der beigefügten Zeichnungen beschrieben und erläutert.

### Kurze Beschreibung der Zeichnungen

Figur 1 zeigt eine beispielhafte Ausführungsform eines Luftfilters mit einem Vorabscheider und einem eingebauten Faltenfilterelement.
Figur 2 zeigt eine weitere beispielhafte Ausführungsform eines nicht erfindungsgemäßen Luftfilters mit einem eingebauten Faltenfilterelement.
Figur 3 zeigt eine beispielhafte Ausführungsform eines nicht erfindungsgemäßen Luftfilters mit tangential angeordneten Zyklonen.
Figur 4 zeigt eine radiale Schnittansicht eines nicht erfindungsgemäßen Luftfilters mit einem tangential anströmenden Zyklon.
Figur 5 zeigt zur Erläuterung eine Aufsicht eines Filterelementes von einer Seite mit zwei An- bzw. Abströmkanälen.
Figur 6 zeigt eine Aufsicht eines Filterelementes mit einem An- bzw. Abströmkanal.
Figur 7 zeigt eine Aufsicht auf eine Vorabscheidergeometrie mit einem Filterelement von einer Seite mit einem Anströmkanal.
Figur 8 zeigt eine Aufsicht auf eine nicht erfindungsgemäße Vorabscheidergeometrie mit einem Filterelement von einer Seite mit zwei Anströmkanälen.
Figur 9 zeigt ein Mehrfachfaltenfilterelement gemäß einer beispielhaften Ausführungsform der Erfindung.
Figur 10 zeigt eine in Figur 7 gezeigte Vorabscheidergeometrie mit geneigt angestellten Zyklonen.

Die im Folgenden beschriebenen Ausführungsformen sind keinesfalls beschränkend aufzufassen und zeigen zweckmäßige, jedoch nicht ausschließliche Ausführungsformen der Erfindung.

### Detailierte Beschreibung beispeilhafter Ausführungsformen der Erfindung

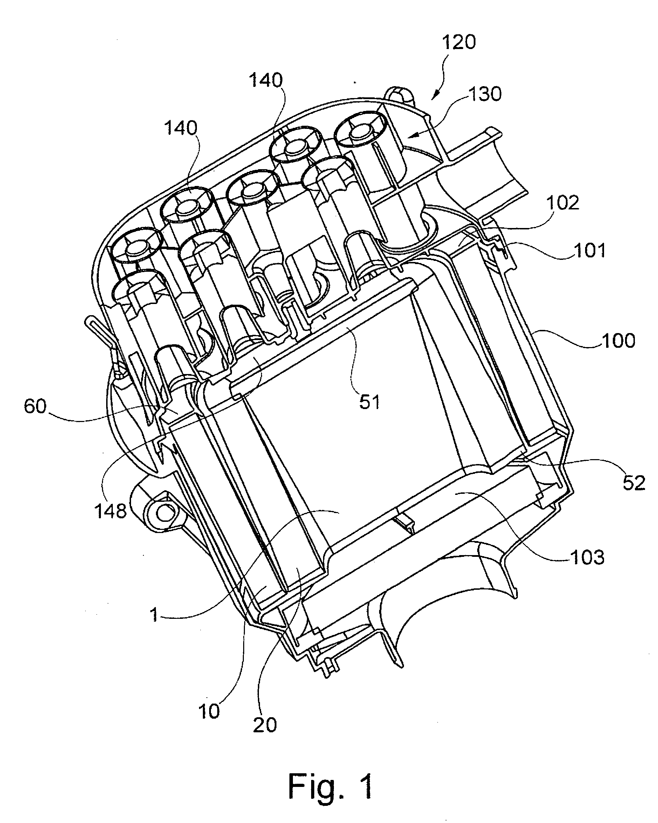

Figur 1 zeigt eine beispielhafte Ausführungsform eines Luftfilters 100 sowie einem Vorabscheider 120. Der Vorabscheider weist eine Zyklonenanordnung 130 auf, die in der hier gezeigten Ausführungsform eine Mehrzahl von Einzelzyklonen 140 aufweist. Die Einzelzyklone weisen jeweils eine Abströmrichtung 148 auf. Die Abströmrichtung der Zyklone 140 ist hier in einen Rohgasraum 102 eines Luftfiltergehäuses gerichtet. In das Luftfiltergehäuse 100 ist ein Filterelement 1 eingesetzt, das hier in Form eines Mehrfachfaltenbalgfilters ausgestaltet ist. Die vor-abgeschiedenen Partikel können über den Staubaustragstutzen 129 ohne zusätzliche Absaugung ausgetragen werden, etwa durch Selbstaustragung mittels Schwerkraft, Motorpulsationen, etc. Dieser einfachere, kostensparende Aufbau kann einen größeren Zyklonzellendurchmesser bedingen, der jedoch nicht so leicht verstopft.

Das hier gezeigte Filterelement weist einen äußeren Faltenbalg 10 sowie einen inneren Faltenbalg 20 auf. Bedingt durch die in Figur 1 gezeigte Einbaurichtung mit einer Dichtungsanordnung im Bereich einer Aufnahme 101 des Luftfiltergehäuses für eine Filterelement 1 auf einer der Rohgasseite zugewandten Seite des Luftfiltergehäuses ergibt sich durch die Ausgestaltung des Filterelementes 1 mit den beiden Faltenbälgen 10, 20 ein Anströmkanal zwischen den beiden Faltenbälgen 10 und 20. Das Filterelement 1 ist in der hier gezeigten Ausführungsform mit einer formwahrenden Schale 60 versehen, an der hier auch die Dichtungskonfiguration des Filterelementes 1 vorgesehen ist, mit der das Filterelement 1 in die Aufnahme 101 des Luftfiltergehäuses 100 eingesetzt wird. In der in Figur 1 gezeigten Ausführungsform sind zwei gegenüberliegende Seiten des inneren Faltenbalges 20 mittels eines Dichtungsleementes 51 verbunden, sodass die Rohgasseite 102 und die Reingasseite 103 bezüglich des Filterelementes 1 voneinander fehlluftdicht getrennt sind. Da der in Figur 1 gezeigte Luftfilter eine Konfiguration aufweist, bei der die Aufnahme 101 axial in Richtung des Vorabscheiders angeordnet ist, ergibt sich bei einer korrespondierenden Ausgestaltung eines hier gezeigten Zweibalgfaltenfilters ein einziger Anströmkanal, der in Form eines Ringspaltes umlaufend auf der rohgasseitigen Anströmfläche des Filterelementes vorgesehen ist. Die Einzelzyklone 140 sind hier auf die Anordnung des Ringspaltes des Anströmkanals ausgerichtet, sodass die Abströmungswege 148 mit dem Ringspalt des Anströmkanales korrespondieren. Auf der Abströmseite des Filterelementes sind der erste Faltenbalg 10 und der erste Faltenbalg 20 mit einem zweiten Dichtungselement 52 dichtend verbunden, sodass auch an dieser Seite eine fehlluftdichte Trennung von Reingasseite und Rohgasseite bzgl. des Filterelementes 1 sichergestellt ist.

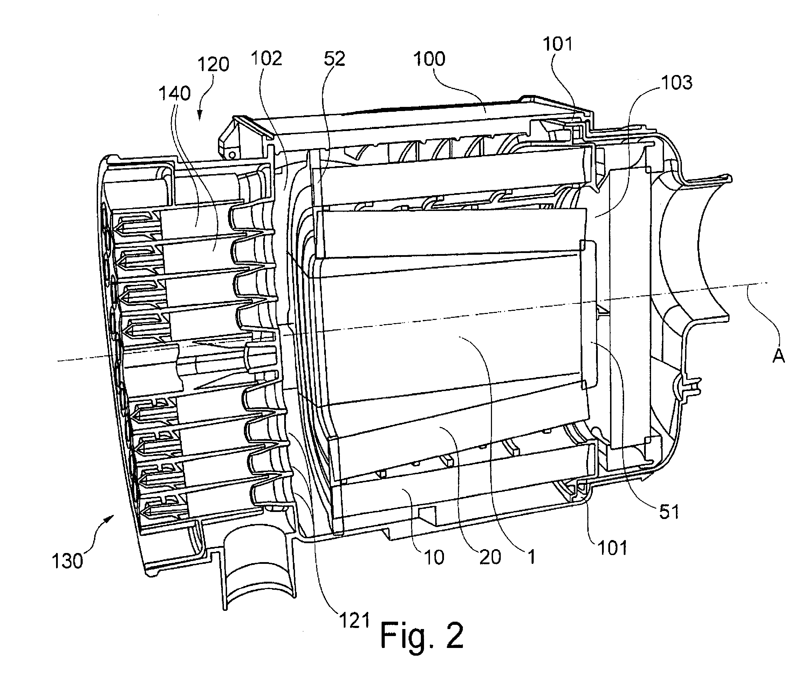

Figur 2 zeigt eine nicht erfindungsgemäße alternative Ausführungsform eines Luftfilters mit einem Vorabscheider 120, der an einem Luftfiltergehäuse 100 angeordnet ist. Auch hier weist der Vorabscheider 120 eine Zyklonenanordnung 130 auf, die eine Mehrzahl von Einzelzyklonen 140 aufweist. Gegenüber der in Figur 1 gezeigten Anordnung weist der in Figur 2 gezeigte Vorabscheider 120 eine größere Anzahl von Einzelzyklonen auf. Die Luftauslasskonfiguration 121 des Vorabscheiders bzw. der Zyklonenanordnung ist auch hier auf die Anströmgeometrie eines Filterelementes 1 optimiert angeordnet. Die vorabgeschiedenen Partikel können auch über den Staubaustragstutzen 129 mittels externer Absaugung ausgetragen werden, etwa durch einen Abgasejektor oder andere Unterdruckquelle wie Kühlergebläse, Dazu bedarf es einer zusätzlichen Leitung. Gleichzeitig kann der Zyklonzellendurchmesser verkleinert werden, was Prinzip bedingt einen höheren Abscheidegrad bringt.

Im Gegensatz zu Figur 1 ist das Filterelement 1 in eine Richtung eingebaut, bei der die Aufnahme 101 für ein Filterelement 1 für ein Luftfiltergehäuse 100 auf einer vom Vorabscheider 120 abgewandten Seite des Luftfiltergehäuses 100 angeordnet ist. Damit befindet sich die Aufnahme und damit auch die Dichtungskonfiguration zur Abdichtung des Filterelementes gegenüber dem Luftfiltergehäuse 100 auf einer reingasseitigen Seite des Luftfiltergehäuses bzgl. des Filterelementes 1. Auf diese Weise vergrößert sich der Rohgasbereich 102, da der in Figur 2 gezeigte Luftfilter nun ein Filterelement aufweist, das über zwei Anströmkanäle angeströmt werden kann. Das in Figur 2 gezeigte Filterelement 1 kann über die äußere Mantelfläche angeströmt werden, da sich der Rohgasraum 102 auch seitlich an dem Filterelement 1 vorbei erstreckt bis zu der Dichtungslinie, die im Bereich der Aufnahme 101 verläuft. Darüberhinaus weist das in Figur 2 als Zweibalgfilter ausgeführte Filterelement 1 einen weiteren Anströmkanal auf, der in Wesentlichen durch die Rohgasseite des inneren Faltenbalges 20 begrenzt wird und hier mittig in dem Filterelement 1 verläuft. Wie mit Bezugnahme auf Figur 1 bereits erläutert, sind die beiden gegenüberliegenden Seiten des inneren Faltenbalges 20 mit einem Dichtungselement 51 hier auf der Reingasseite miteinander verbunden, während der äußere Faltenbalg 10 und der innere Faltenbalg 20 auf der Rohgasseite mit dem Dichtungselement 52 fehlluftdicht miteinander verbunden sind.

Aufgrund der Tatsache, dass in der in Figur 2 gezeigten Konfiguration nun zwei Anströmkanäle bereitgestellt werden, können die Einzelzyklone jeweils auf die entsprechenden Anströmkanäle ausgerichtet sein. Da die Anströmkanäle einmal radial außen und einmal radial innen auf der Stirnfläche des Filterelementes 1 liegen, können die Einzelzyklone 140 zum einen etwas kleiner ausgeführt werden als in der in Figur 1 gezeigten Ausführungsform, jedoch dafür die gesamte Ringspaltlänge beider Anströmkanäle überdecken, die in der in Figur 2 gezeigten Ausführungsform wesentlich länger ist als die des einzigen Ringspaltes der Figur 1.

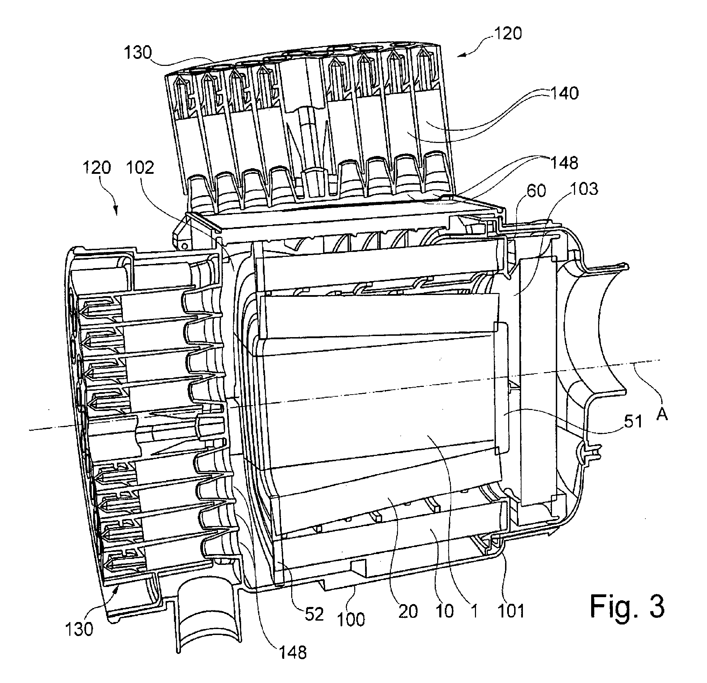

Figur 3 zeigt eine weitere beispielhafte nicht erfindungsgemäße Ausführungsform, in der neben einem in einer axialen Ausdehnungsrichtung A des Luftfilters angeordneten Vorabscheiders 120 ein weiterer Vorabscheider 120 seitlich angeordnet ist, der prinzipiell einen ähnlichen oder gleichen Aufbau aufweisen kann, wie der auf der axialen Ausdehnungsrichtung angeordnete Vorabscheider. Auch der zweite radial angeordnete Vorabscheider 120 weist eine Zyklonenanordnung 130 mit einer Mehrzahl von Einzelzyklonen 140 auf, die jeweils wiederum einen Abströmweg 148 aufweisen. Es sei verstanden, dass eine derartige radial angeordnete Vorabscheideranordnung auch ohne eine axial angeordnete Vorabscheideranordnung vorgesehen sein kann, sodass ausschließlich ein radial angeordneter Vorabscheider mit Einzelzyklonen 140 vorgesehen ist. Die in Figur 3 gezeigte Ausführungsform zeigt einen Luftfilter mit einem Luftfiltergehäuse 100 mit einem Zweifachfaltenbalgfilter als Filterelement 1, bei dem die Abdichtung des Rohgasraumes 102 zu dem Reingasraum 103 an einer Dichtungsnaht im Bereich der Aufnahme 101 seitens der Reingasseite 103 angeordnet ist. Auf diese Weise ergibt sich für das Filterelement 1 in dem Luftfiltergehäuse 100 wieder eine analog zu Figur 2 zweikanalige Anströmgeometrie, bei der ein Anströmkanal zentrisch angeordnet ist sowie ein weiterer Anströmkanal radial außen angeordnet ist, sodass über den radial außen angeordneten Anströmkanal eine Anströmung über die äußere Mantelfläche des äußeren Filterbalges 10 erfolgen kann. Auf diese Weise kann die innere Mantelfläche des durch den inneren Filterbalg 20 gebildeten innere Anströmkanals durch den axial angeordneten Vorabscheider mit den daran angeordneten Einzelzyklonen angeströmt werden, während der radial außenliegende Anströmkanal über die äußere Mantelfläche des äußeren Faltenbalges 10 durch den radial angeordneten Vorabscheider 120 mit den daran befindlichen EinzelzykIonen 140 angeströmt wird. Auf diese Weise kann eine gezielte Anströmung der Mantelflächen erreicht werden, um so eine optimale Strömungsgeometrie innerhalb eines Luftfiltergehäuses bereitstellen zu können.

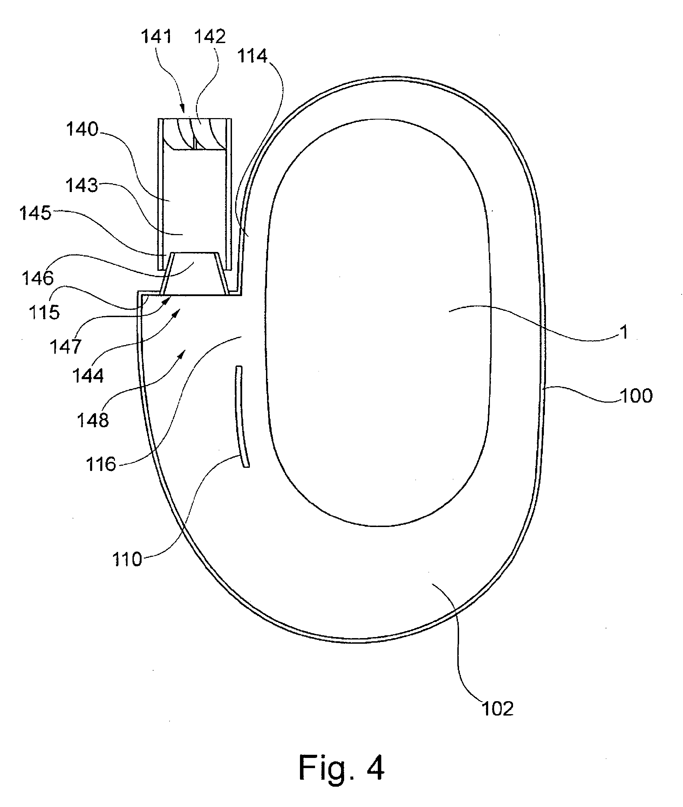

Figur 4 zeigt eine Schnittansicht in einer radialen Ausdehnungsrichtung eines Filterelementes 1 bzw. eines Luftfiltergehäuses 100. In dieser nicht erfindungsgemäßen Anordnung ist die radiale Anordnung eines Einzelzyklons 140 zu sehen, der in der hier gezeigten Ausführungsform mit seinem Abströmweg 148 in eine tangentiale Richtung bzgl. Der Mantelfläche des Filterelementes 1 ausgerichtet ist. Der Einzelzyklon 140 weist dabei einen Zyklonkanal 143 mit einer Einlassseite 141 und einer Auslassseite 144 auf. Die Einlassseite 141 weist dabei eine Luftleitblechanordnung 142 auf, die so angeordnet ist, dass eine einströmende Luft- bzw. ein einströmendes Fluid derart in eine Rotation um eine Längsachse des Zyklonkanals 143 verbracht wird, dass darin befindliche Staubpartikel fliehkraftbedingt an die äußere Wand des Zyklonkanals 143 geschleudert werden, und bei einer überlagerten Strömung von der Eingangsseite 141 in Richtung der Ausgangsseite 144 in den Zwischenraum 145 zwischen dem Zyklonkanalgehäuse und dem Auslasstrichter fallen bzw. gedrückt werden. Auf diese Weise kann fliehkraftbedingt das zu reinigende Fluid bzw. die zu reinigende Luft von schweren Staubpartikeln gereinigt werden, während die von den Staubpartikeln gereinigte Luft aus der Reinluftauslassöffnung 148 in den Rohgasraum 102 des Luftfiltergehäuses 100 eintritt. Das Luftfiltergehäuse weist in der in Figur 4 gezeigten Ausführungsform einen Bereich auf, der nur einen geringen Abstand zu dem einzusetzenden Luftfilter 1 aufweist, der in Figur 4 mit 114 gekennzeichnet ist. Darüberhinaus weist das Luftfiltergehäuse 100 auch einen Bereich 116 auf, der einen relativ breiten Abstand des Luftfiltergehäuses zu dem einzusetzenden Luftfilterelement 1 aufweist. Diese beiden Bereiche 114 und 116 sind durch eine Stufe 115 voneinander getrennt, wobei sich diese Stufe in der in Figur 4 gezeigten Ausführungsform in radiale Richtung erstreckt. In dieser Stufe kann beispielsweise die Mündung des Einzelzyklons vorgesehen sein, insbesondere wenn dieser in eine tangentiale Richtung in den Innenraum bzw. den Rohgasraum 102 des Luftfiltergehäuses 1 einbläst. Auf diese Weise wird das einströmende Fluid bzw. die einströmende Luft in eine tangentiale Drehung um das Filterelement 1 versetzt, sodass nicht nur der in unmittelbarer Nähe des Zyklonauslasses befindliche Mantelbereich des Filterelementes 1 angeströmt wird, sondern auch in Umfangsrichtung weiter entfernt liegende Bereiche des Filterelementes 1. Da betriebsbedingt das zu reinigende Fluid bzw. die zu reinigende Luft durch die Filterfläche des Filterelementes 1 tritt, wird die Menge des zu reinigenden Fluides in Umlaufende Richtung weniger, da diese sukzessiv durch die Filterfläche von dem Rohgasraum 102 in den hier nicht gezeigten Reingasraum übertritt. Durch eine sich verjüngende Ausgestaltung des Zwischenraumes zwischen dem Luftfiltergehäuse 100 und dem Filterelement 1 kann jedoch der anstehende Druck des zu reinigenden Fluides bzw. der zu reinigenden Luft im Wesentlichen über die gesamte Umfangslänge des Filterelementes 1 konstant gehalten werden. Um insbesondere Turbulenzen im Bereich der Einströmmündung an der Stufe 15 zu vermeiden, können beispielsweise Luftleitbleche 110 oder andere strömungsleitende und optimierende Vorrichtungen vorgesehen sein. Statt des Einzelzyklons kann auch ein einfacher Stutzen vorgesehen sein, der einen Lufteinlass mit einer tangentialen Anströmung hervorruft. Durch eine tangentiale Anströmung und eine zirkulare Führung der Strömung um das Filterelement 1 kann im Gehäuse 100 eine Vorabscheidung erreicht werden. In diesem Fall kann ein Staubaustrag im Gehäuse integriert werden, um die abgeschiedenen Partikel aus dem Gehäuse abzuführen.

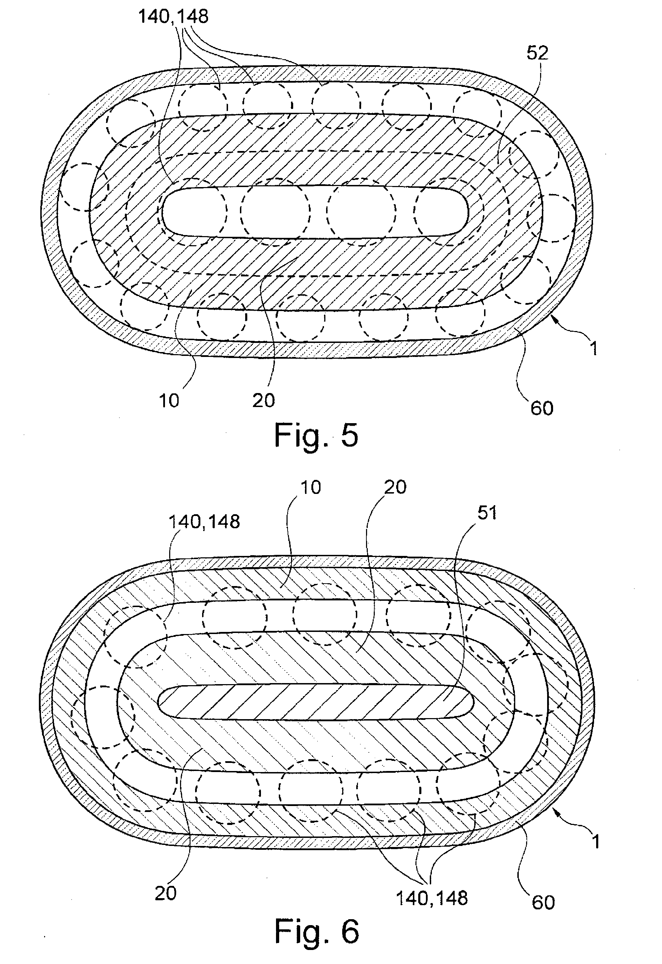

Figur 5 zeigt zur Erläuterung eine schematische Ansicht eines Faltenfilterelementes, mit einer schematischen nicht erfindungsgemäßen Anordnung von Einzelzyklonabströmwegen 148. Figur 5 zeigt dabei eine Ausführungsform bei der das Filterelement zwei Anströmkanäle aufweist, analog der in Figur 2 und 3 beschriebenen Ausführungsformen. Die formwahrende Schale 60 mit einer daran angeordneten Dichtungsgeometrie befindet sich in der von den Einzelzyklonen 140 abgewandten axialen Richtung des Luftfiltergehäuses. In der in Figur 5 gezeigten Ausführungsform sind der äußere Faltenbalg 10 und der innere Faltenbalg 20 durch das zweite Dichtungselement 52 fehlluftdicht miteinander verbunden, sodass von den Einzelzyklonen angeströmte zu reinigende Luft in den äußeren Filterkanal sowie den inneren Filterkanal einströmt. Über den äußeren Filterkanal strömt die zu reinigende Luft über die äußere Mantelfläche des äußeren Faltenfilters in einen hier nicht gezeigten Reingasbereich, während die durch den inneren Anströmkanal einströmende Luft durch eine innere Mantelfläche des inneren Faltenbalges in den Reingasbereich einströmt.

Figur 6 zeigt eine Anordnung eines Filterelementes, das im Wesentlichen mit dem in Figur 5 gezeigten Filterelement übereinstimmen kann, wobei jedoch dieses Filterelement dann von der axial gegenüberliegenden Seite betrachtet wird. In diesem Fall wird der Anströmkanal durch die innere Mantelfläche des äußeren Filterelementes 10 und die äußere Mantelfläche des inneren Filterelementes 20 gebildet. Der dadurch entstehende Ringkanal wird durch die Abströmwege 148 der Einzelzyklone 140 angeströmt. Dabei sind die gegenüberliegenden inneren Mantelflächen des inneren Faltenfilters 20 mit einem ersten Dichtungselement 51 fehlluftdicht abgedichtet. Eine formwahrende Schale 60 ist in der in Figur 6 gezeigten Aufsicht relativ schmal ausgeführt, sodass auch die Stirnflächen sowohl des äußeren Faltenbalges 10 als auch des inneren Faltenbalges 20 für eine Anströmfläche zur Verfügung stehen. Dabei versteht es sich, dass die jeweils reingasseitigen Faltenseiten, die beim inneren Filterfaltenbalg 20 innen liegen bzw. die beim äußeren Filterfaltenbalg 10 außen liegen jeweils fehlluftdicht dem ersten Dichtungselement 51 bzw. der dichtenden formwahrenden Schale 60 verbunden sind, sodass wiederum eine zuverlässige Trennung zwischen Reingasseite und Rohgasseite gewährleistet ist.

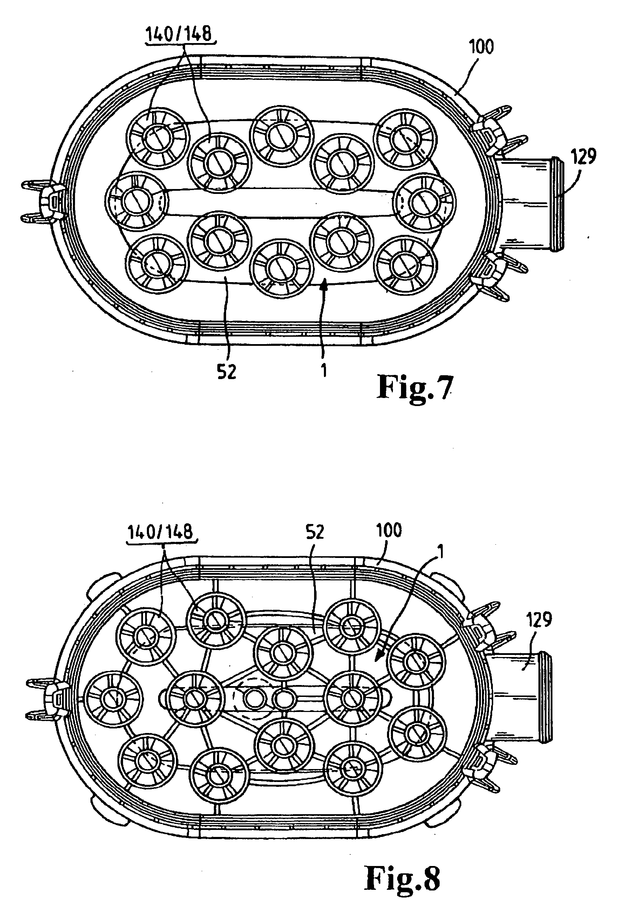

Figur 7 zeigt eine Aufsicht auf eine Vorabscheidergeometrie mit einem Filterelement von einer Seite mit einem Anströmkanal. Die Zyklone 140 sind entlang der Öffnung des Anströmkanales verteilt. Dabei folgen die Zyklone nicht direkt der Umfangskontur des einzusetzenden Filterelementes 1, sondern sind in der hier gezeigten Ausführungsform leicht versetzt. Auf diese Weise kann eine Optimierung hinsichtlich sowohl des Anströmverhaltens als auch der geometrischen Anordnung bezüglich des Platzbedarfes für die Zyklone erreicht werden. Seitlich ist ein Staubauslass 129 vorgesehen, über den in den Zyklonen 140 abgeschiedene Partikel entweder durch Schwerkraft oder durch eine externe Absaugung abgeführt werden können.

Figur 8 zeigt eine Aufsicht auf eine nicht erfindungsgemäße Vorabscheidergeometrie mit einem Filterelement von einer Seite mit zwei Anströmkanälen. Die hier gezeigten Zyklone 140 haben einen etwas kleineren Durchmesser als die in Figur 7 gezeigten Zyklone. Jedoch sind diese Zyklone so verteilt, dass sie zwei Anströmkanäle anströmen, einen zentralen innen und einen äußeren. Auch hier ist eine Optimierung hinsichtlich der Anströmung und der geometrischen Anordnung vorherrschend, sodass unter beiden Gesichtspunkten eine optimierte Anordnung bereitgestellt werden kann.

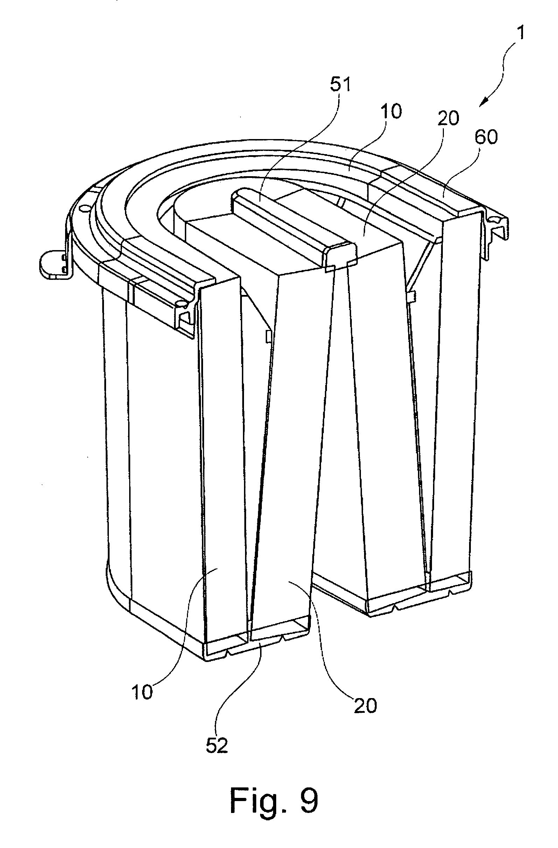

Figur 9 zeigt eine dreidimensionale schematische Ansicht eines Zweibalgfaltenfilterelementes, bei dem die hier von schräg oben sichtbare Seite mit der Aufsicht des in Figur 6 gezeigten Faltenfilters korrespondiert, während die hier verdeckte untere Seite mit der in Figur 5 gezeigten Aufsicht des Filterelementes 1 korrespondiert. In Figur 9 ist der schematische Aufbau des Faltenfilterelementes etwas deutlicher sichtbar aufgrund der räumlichen Darstellung des Filterelementes. Die formwahrende Schale 60 ist hier mit einer Dichtungsanordnung versehen, die in einer hier nicht gezeigten Aufnahme eines Luftfiltergehäuses eingreifen kann. Die formwahrende Schale 60 erstreckt sich dabei in der hier gezeigten Ausführungsform nur teilweise über die Faltentiefe des äußeren Faltenbalges 10, um auf diese Weise die Anströmfläche des äußeren Faltenbalges insbesondere der innen Mantelfläche des äußeren Faltenbalges 10 zu verbessern, sofern von dieser Seite eine Anströmung erfolgt.

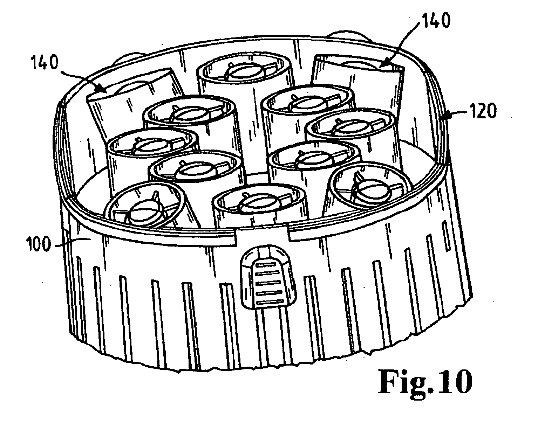

Figur 10 zeigt eine in Figur 7 gezeigte Vorabscheidergeometrie mit geneigt angestellten Zyklonen. Die Zyklone sind mit ihren Auslässen bzw. Abströmgeometrien auf die Anströmkanäle ausgerichtet. Dies kann nicht nur durch eine entsprechende Verteilung entlang des Umfangs erfolgen, sondern auch durch eine Ausrichtung der Zyklonauslässe. Dabei können sowohl die gesamten Zyklone als auch nur deren Auslässe geneigt sein.

Es sei angemerkt, dass der Begriff " umfassen" weitere Elemente nicht ausschließt, ebenso wie der Begriff ein" und " eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

## Patentansprüche

1. Luftfilter für eine Brennkraftmaschine mit
einem Luftfiltergehäuse (100) mit einem Rohgasraum (102),
einem Vorabscheider (120) aufweisend eine Zyklonanordnung (130) mit einer Mehrzahl von Einzelzyklonen (140) mit jeweils einem Abströmweg (148),
einem in das Luftfiltergehäuse eingesetzten Filterelement in der Form eines Mehrfachbalgfilters mit einem außenliegenden Filterbalg und einem radial dazu innenliegenden Filterbalg, wobei das Filterelement einen ringförmigen Anströmkanal aufweist, der durch eine innere Mantelfläche des äußeren Filterbalges und die äußere Mantelfläche des inneren Filterbalges gebildet ist,
wobei das Luftfiltergehäuse (100) eine Aufnahme (101) für das Filterelement und einen durch das Luftfiltergehäuse (100) und eine rohgasseitige Mantelfläche bzw. Anströmfläche des eingesetzten Filterelements begrenzten Rohgasraumbereich aufweist, wobei die Abströmrichtung der Einzelzyklone (140) in den Rohgasraum (102) des Luftfiltergehäuses gerichtet sind,
wobei die Aufnahme (101) des Luftfiltergehäuses (100) ausgelegt ist, um das Filterelement aufzunehmen,
wobei der Vorabscheider (120) eine Luftauslasskonfiguration (121) aufweist, wobei die Luftauslasskonfiguration mit einer Anströmfläche des einzusetzenden Filterelementes derart korrespondiert,
dass die Abströmwege (148) des Vorabscheiders (120) auf eine Anströmfläche des eingesetzten Filterelementes so ausgerichtet verteilt sind,
dass wenigstens ein Teil der Einzelzyklone (140) mit ihren Abströmwegen (148) auf den ringförmigen Anströmkanal des eingesetzten Filterelementes ausgerichtet sind.

2. Luftfilter nach Anspruch 1, wobei das Luftfiltergehäuse (100) einen zu einer radialen Mantelfläche des eingesetzten Filterelementes in Umfangsrichtung abnehmenden Abstand aufweist.

3. Luftfilter nach einem der vorhergehenden Ansprüche, wobei die Mehrzahl von Einzelzyklonen (140) mit ihren Abströmwegen (148) auf einen Ringspalt zwischen wenigstens zwei Filterbälgen des eingesetzten Mehrfachfilterbalges verteilt ausgerichtet ist.

4. Luftfilter nach einem der vorhergehenden Ansprüche, wobei die Faltentiefe des außenliegenden Filterbalges (10) kleiner ist als die Faltentiefe des dazu benachbart radial innen liegenden Filterbalges (20).

5. Luftfilter nach einem der vorhergehenden Ansprüche, wobei der außenliegende Filterbalg (10) an einer der Anströmseite zugewandten Seite eine formwahrende Schale (60) aufweist, wobei sich die Schale (60) nur teilweise in einer radialen Richtung über die Faltentiefe des außenliegenden Filterbalges (10) erstreckt.

6. Luftfilter nach einem der vorhergehenden Ansprüche, wobei ein Einzelzyklon (140) einen Zyk-Ionkanal (143) aufweist, an dessen Einlassende (141) eine Leitblechanordnung (142) vorgesehen ist, die ausgelegt ist, um einströmende Luft in eine Drehbewegung um eine Erstreckungsachse des Zyklonenkanals (143) zu versetzen, und an dessen Auslassende (144) eine konzentrische Auslassanordnung vorgesehen ist mit einem innenliegenden Reinluftauslass (146) und einem außenliegenden Filterpartikelauslass (145).

## Claims

1. Air filter for an internal combustion engine having
an air filter housing (100) with a raw gas chamber (102),
a pre-separator (120) featuring a cyclone arrangement (130) with a plurality of individual cyclones (140) with a discharge path (148) each,
a filter element inserted into the air filter housing in the shape of a multiple filter bellows with an external filter bellows and an inner filter bellows disposed radially thereto, wherein the filter element features an annular inflow channel which is formed by an inner girth area of the external filter bellows and the external girth area of the inner filter bellows,
wherein the air filter housing (100) features a receptacle (101) for the filter element and a raw gas chamber defined by the air filter housing (100) and a raw gas sided girth area and/or the inflow surface of the inserte filter element, wherein the outflow direction of the individual cyclones (140) is directed towards the inside of the raw gas chamber (102) of the air filter housing,
wherein the receptacle (101) of the air filter housing (100) is designed to accommodate the filter element,
wherein the pre-separator (120) features an air outlet configuration (121), wherein the air outlet configuration corresponds with an inflow surface of the filter element to be inserted in such a way,
that the discharge paths (148) of the pre-separator (120) are distributed on an inflow surface of the inserted filter element in such a way,
that at least one part of the individual cyclones (140) are directed towards their discharge paths (148) towards the annular inflow channel of the inserted filter element.

2. Air filter according to claim 1, wherein the air filter housing (100) features a distance decreasing in circumferential direction with regard to a radial girth area of the inserted filter element.

3. Air filter according to one of the above claims, wherein a plurality of individual cyclones (140) with their discharge paths (143) are distributed towards an annular gap between at least two filter bellows of the inserted multiple filter bellows.

4. Air filter according to one of the above claims, wherein the fold depth of the external filter bellows (10) is smaller than the fold depth of the adjacent radially inner filte bellows (20).

5. Air filter according to one of the above claims, wherein the external filter bellows (10) features a shape-retaining shell (60) on a side facing the inflow side, wherein the shell (60) extends only partially in a radial direction over the fold depth of the external filter bellows (10).

6. Air filter according to one of the above claims, wherein an individual cyclone (140) features a cyclone conduit (143) at the inlet end (141) of which is provided a baffle arrangement (142) which is designed to cause inflowing air to rotate around an extension axis of the cyclone conduit (143) and at the outlet end (144) of which a concentric outflow arrangement is provided having an internal clean air outlet (148) and an external filter particle outlet (145).

## Revendications

1. Filtre à air pour un moteur à combustion interne comportant un boîtier de filtre à air (100) avec un compartiment à gaz brut (102),
un pré-séparateur (120) présentant un ensemble de cyclones (130) avec plusieurs cyclones individuels (140) comportant chacun une trajectoire d'échappement (148),
un élément filtrant monté dans le boîtier de filtre à air et présenté sous forme de soufflet de filtre multiple avec un soufflet de filtre externe et un soufflet de filtre interne disposé de façon radiale par rapport au soufflet de filtre externe, l'élément filtrant présentant un canal d'afflux annulaire qui est formé par une surface d'enveloppe intérieure du soufflet de filtre externe et par la surface d'enveloppe extérieure du soufflet de filtre interne,
le boîtier de filtre à air (100) présentant un logement (101) pour l'élément filtrant et un compartiment à gaz brut limité par le boîtier de filtre à air (100) et par une surface d'enveloppe du côté de gaz brut et/ou une surface d'afflux de l'élément filtrant monté, la direction d'échappement des cyclones individuels (140) étant dirigée vers le compartiment à gaz brut (102) du boîtier de filtre à air,
le logement (101) du boîtier de filtre à air (100) étant conçu pour réceptionner l'élément filtrant,
le pré-séparateur (120) présentant une configuration de sortie d'air (121), la configuration de sortie d'air correspondant avec une surface d'afflux de l'élément filtrant à monter de sorte que
les trajectoires d'échappement (148) du pré-séparateur (120) soient réparties sur une surface d'afflux de l'élément filtrant monté,
qu'au moins une partie des cyclones individuels (140) soit dirigée, avec leurs trajectoires d'échappement (148), sur le canal d'afflux annulaire de l'élément filtrant monté.

2. Filtre à air selon la revendication 1, le boîtier de filtre à air (100) présentant une distance décroissante en sens circonférentiel par rapport à une surface d'enveloppe radiale de l'élément filtrant monté.

3. Filtre à air selon l'une des revendications précédentes, plusieurs cyclones individuels (140) étant répartis, avec leurs trajectoires d'échappement (143), sur une fente annulaire entre au moins deux soufflets de filtre du soufflet de filtre multiple monté.

4. Filtre à air selon l'une des revendications précédentes, la profondeur des plis du soufflet de filtre externe (10) étant inférieure à la profondeur des plis du soufflet de filtre interne (20) se trouvant à proximité en sens radial.

5. Filtre à air selon l'une des revendications précédentes, le soufflet de filtre externe (10) présentant sur un côté orienté vers le côté d'afflux une coque (80) indéformable, la coque (60) s'étendant uniquement en partie en sens radial au-dessus de la profondeur des plis du soufflet de filtre externe (10).

6. Filtre à air selon l'une des revendications précédentes, un cyclone individuel (140) présentant un canal de cyclone (143) à l'extrémité d'admission (141) duquel est prévue un ensemble de tôles de guidage (142) conçu pour mettre en rotation l'air affluant autour d'un axe d'extension du canal de cyclone (143) et à l'extrémité de sortie (144) duquel est prévu un ensemble de sortie concentrique avec une sortie d'air pur interne (148) et une sortie de particules filtrantes externe (145).
